(19) Europäisches Patentamt

European Patent Office

Office européen des brevets

(11) **EP 1 158 268 B1**

(12) **EUROPÄISCHE PATENTSCHRIFT**

(45) Veröffentlichungstag und Bekanntmachung des Hinweises auf die Patenterteilung:
**19.04.2006  Patentblatt 2006/16**

(51) Int Cl.:
*G01B 15/08* [(2006.01)]      *F28F 13/18* [(2006.01)]

(21) Anmeldenummer: **01112507.7**

(22) Anmeldetag: **23.05.2001**

(54) **Klassifikation der Oberflächenbeschaffenheit von Wärmetauscherrohren mittels der Radar-Doppler-Spektroskopie**

Classification of the surface-condition of heat exchanger tubes by means of radar-doppler-spectroscopy

Classification de l'état de surface de tubes d'échangeurs de la chaleur par radar-doppler-spectroscopie

(84) Benannte Vertragsstaaten:
**AT BE CH CY DE DK ES FI FR GB GR IE IT LI LU MC NL PT SE TR**

(30) Priorität: **24.05.2000  DE 10025574**

(43) Veröffentlichungstag der Anmeldung:
**28.11.2001  Patentblatt 2001/48**

(73) Patentinhaber: **WIELAND-WERKE AG**
**89070 Ulm (DE)**

(72) Erfinder:
• **Die Erfinder haben auf ihre Nennung verzichtet.**

(56) Entgegenhaltungen:
**EP-A- 0 148 609          DE-A- 4 311 103**
**DE-A- 19 813 041        DE-A- 19 817 260**
**DE-C- 4 404 357**

EP 1 158 268 B1

**Beschreibung**

Gegenstand der Erfindung ist ein Verfahren zur Kennzeichnung der strukturierten Innen- und/oder Außenoberfläche längsnahtgeschweißter bzw. nahtloser Wärmetauscherrohre.

Nach dem Stand der Technik werden für Wärmeübertragungsprozesse bevorzugt oberflächenstrukturierte Rohre eingesetzt. Diese Rohre werden üblicherweise nahtlos oder längsnahtgeschweißt hergestellt. In aller Regel handelt es sich hierbei um Kupferrohre.

Rohre mit strukturierter Oberfläche weisen eine größere Oberfläche auf als Glattrohre. Rohre mit großer Oberfläche werden bevorzugt in Wärmetauscheranlagen eingesetzt. Ziel ist, bei kleinerer Baugröße und leichterer Bauweise höhere Leistungsdichten zu erreichen. Hierzu ist es erforderlich, die Leistung des einzelnen Rohres zu verbessern.

Üblicherweise erfolgt die Charakterisierung von strukturierten Rohren zeit- und kostenintensiv durch Ermittlung und Analyse der die Struktur kennzeichnenden geometrischen Größen wie Strukturhöhen und Elementwinkeln. Beispiele für geometrische Strukturgrößen sind u. a. in der EP 0 148 609 ausführlich beschrieben. Zur Charakterisierung einer geometrischen Oberflächenstruktur sind daher viele Einzelmessungen erforderlich. Neben dem erheblichen meßtechnischen Aufwand ist die Aufsummierung von Meßfehlern nicht auszuschließen.

Zur Bestimmung der Wärmeübertragungseigenschaften eines Wärmetauscherrohrs ist es erforderlich, umfangreiche Messungen an Einzelrohren oder Rohrbündeln auf einem speziellen Wärmemeßstand durchzuführen. Vor dem Hintergrund der enorm großen Geometrievielfalt der Strukturelemente stellt sich die Frage nach einer eindeutigen meßtechnischen Charakterisierung der Strukturfeinheiten und deren Wärmeleistungseigenschaften mit einem gegenüber dem Stand der Technik deutlich geringerem Aufwand.

Der Erfindung liegt daher die Aufgabe zugrunde, anstelle der aufwendigen, wärmetechnischen Vermessung von Einzelrohren ein Verfahren zur schnellen, eindeutigen und reproduzierbaren Charakterisierung von strukturierten Oberflächen zu beschreiben. Insbesondere soll eine berührungslos arbeitende, meßtechnische Möglichkeit gefunden werden, bei der es nicht erforderlich ist, daß ein gebrauchsfertiges Rohrmuster vorliegt.

Diese Aufgabe wird erfindungsgemäß durch die kennzeichnenden Merkmale des Anspruchs 1 bzw. 2 gelöst.

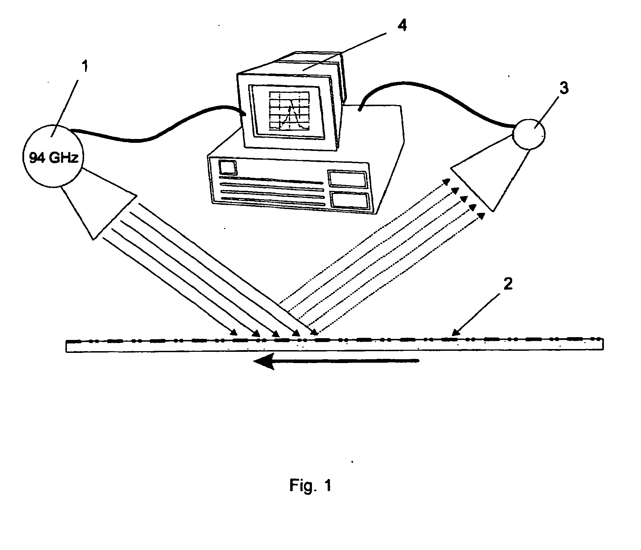

Das Meßverfahren der Radar-Doppler-Spektroskopie ist in Fig. 1 schematisch dargestellt. Dabei werden die von einem Mikrowellensender 1 unter einem bestimmten Winkel ausgehenden, elektromagnetischen Wellen im Frequenzbereich von 1 bis 100 GHz von einer bewegten Probe 2 reflektiert, von einem Empfänger 3 registriert und in einer Einheit 4 ausgewertet. Der Pfeil gibt die Bewegungsrichtung der Probe an. (Hinsichtlich der Grundlagen der Radar-Meßtechnik wird beispielsweise auf das Buch von M. Skolnik "Introduction to Radar Systems", McGraw-Hill (1980), insbes. S.68 ff., verwiesen).

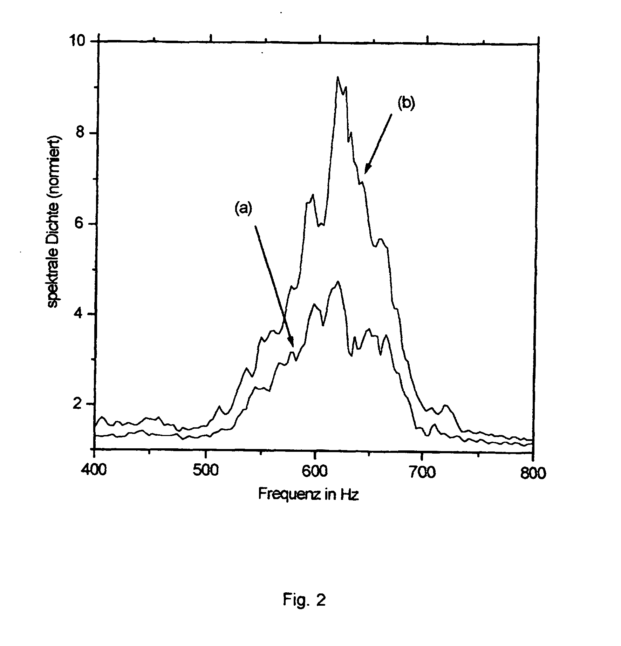

Es wird die sich aufgrund des Doppler-Effekts ergebende Frequenzverschiebung gemessen. Durch die strukturierte Oberfläche des bewegten Bandes wird eine geometrisch bedingte Frequenzverbreiterung im reflektierten Anteil der ursprünglich monochromatisch einfallenden elektromagnetischen Welle bedingt. Diese Frequenz- oder Linienverbreiterung ist charakteristisch für die geometrische Struktur der Oberfläche und zeigt sich nach einer Fourier'schen Frequenzanalyse des reflektierten Signals als Frequenzspektrum im Bereich der durch die Versuchsparameter bestimmten Dopplergrundfrequenz $f_0$ (vgl. die später zu erläuternden Frequenzspektren nach Fig. 2, die jeweils auf das Glattrohr normierte Spektren als Funktion der Doppler-Verschiebung (Hz) zeigen).

Es werden folgende Größen definiert:

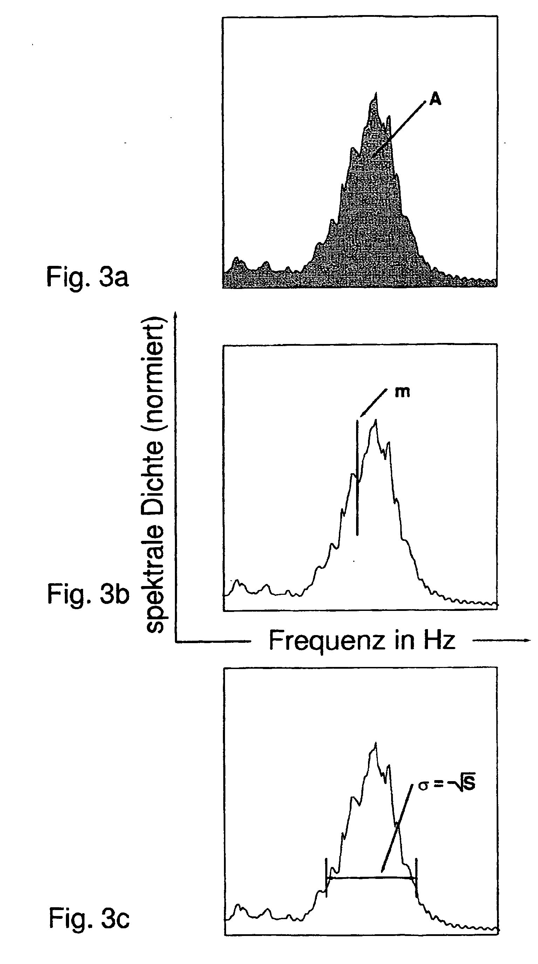

Flächenintegral A (vgl. schematische Darstellung in Fig. 3a),
Mittelwert m (vgl. Fig. 3b) und als Maß für die Breite
Varianz S (vgl. Fig. 3c)
(bzw. Standardabweichung $\sigma = \sqrt{S}$).

Diese Größen lassen sich mathematisch folgendermaßen darstellen:

Sei f (x) die (auf eine Glattrohroberfläche normierte) Verteilungsfunktion der Radar-Doppler-Frequenzen x, d. h. das Radar-Doppler-Spektrum einer zu untersuchenden Struktur, so gilt:

-    Flächenintegral    $$A \equiv \int_{-\infty}^{\infty} f(x) \cdot dx$$

- Erwartungswert oder Mittelwert $\quad m \equiv \dfrac{\displaystyle\int_{-\infty}^{\infty} x \cdot f(x) \cdot dx}{\displaystyle\int_{-\infty}^{\infty} f(x) \cdot dx}$

- Varianz $\quad S \equiv \dfrac{\displaystyle\int_{-\infty}^{\infty} (x-m)^2 \cdot f(x) \cdot dx}{\displaystyle\int_{-\infty}^{\infty} f(x) \cdot dx}$

- Standardabweichung $\quad \sigma \equiv \sqrt{S}$

(vgl. beispielsweise Bronstein/Semendjajew: "Taschenbuch der Mathematik" (22.Auflage, 1985), S. 665 bis 668).

Das Verfahren der Radar-Doppler-Spektroskopie wurde bisher beispielsweise zur Untersuchung der Welligkeit von Meeresoberflächen eingesetzt (vgl. z.B. D.R. Thompson: "Probing the Ocean Surface with Microwave Radar" in Johns Hopkins APL Technical Digest, Volume 10, Number 4 (1989), S. 332 - 338, oder R. Romeiser: "Doppler Spectra of the Radar Backscatter From the Sea Surface; Obtained From a Three-Scale Composite Surface Model" in International Geoscience and Remote Sensing Symposium (IGARSS) v 2, 1994, IEEEE, Piscataway, NJ, USA, 94CH3378-7, S.729).

Weiterhin ist aus DE 19817260, DE 19813041 und DE 4311103 bekannt, Radar-Doppler-Spektroskopie Zur Untersuchung von Werkstückoberflächen einzusetzen.

Im Rahmen der Erfindung wird eine Anwendung auf die Untersuchung der strukturierten Oberfläche von Wärmetauscherrohren vorgeschlagen.

Die Oberfläche gängiger Wärmetauscherrohre läßt sich durch folgende Bereiche kennzeichnen:

$1 \times 10° \leq A \leq 2 \times 10^4$, insbes. $1 \times 10^1 \leq A \leq 5 \times 10^3$
$1 \times 10^2 \leq S \leq 5 \times 10^5$, insbes. $1 \times 103 \leq S \leq 1 \times 10^5$

(bzw. $1 \times 10^1 \leq \sigma \leq 1 \times 10^3$, insbes. $3 \times 10^1 \leq \sigma \leq 5 \times 10^2$).

Im Rahmen der Erfindung zeigt sich weiterhin überraschenderweise, daß eine eindeutige und reproduzierbare Korrelation zwischen der makroskopischen Oberflächentopographie, der spezifischen wärmetechnischen Kenngröße wärmeübergangskoeffizient a sowie den objektiven, integralen Charakteristika der Radar-Doppler-Spektren wie Flächenintegral A, Mittelwert m, Varianz S und Standardabweichung $\sigma$ vorliegt. Von besonderer Bedeutung ist, daß die Kenngrößen der Radar-Doppler-Spektren zur wärmetechnischen Klassifizierung geeignet sind, ohne daß eine detailgenaue Kenntnis der Geometriegrößen der entsprechenden Oberflächenstrukturen oder gebrauchsfertige Rohrmuster erforderlich sind.

Das Verfahren der Radar-Doppler-Spektroskopie ist daher gut geeignet, beliebige Oberflächenstrukturen, die z. B. zur Verbesserung der spezifischen Wärmeleistung von Rohren zur Wärmeübertragung angewendet werden, im Hinblick auf die zu erwartende Wärmeleistung der Rohre zu klassifizieren. Der erfindungsgemäße Zusammenhang zwischen den durch Radar-Doppler-Spektroskopie erhaltenen Meßgrößen und der spezifischen wärmetechnischen Leistung eines gebrauchsfertigen Rohrmusters zeichnet sich durch eine ausgezeichnete Reproduzierbarkeit aus. Der apparative und zeitliche Aufwand ist gegenüber dem Stand der Technik deutlich geringer.

Bei Rohren mit Strukturen, die bevorzugt für die Anwendung in Verflüssigungsprozessen eingesetzt werden, insbes. bei Strukturen mit scharfen, konvexen Kanten (vgl. DE 44 04 357 C1), zeigt sich, dass sich der Doppler-Spektrumsmittelwert m zu Frequenzen oberhalb der Doppler-Grundfrequenz $f_0$ verschiebt und dass eine Erhöhung des Wärmeübergangskoeffizienten $\alpha_{cond}$ gleichzusetzen ist mit dem zunehmenden Flächenintegral A des Radar-Doppler-Spektrums. Gleichzeitig nehmen die Varianz S und die Standardabweichung $\sigma$ ab.

Bei Rohren mit Strukturen, die bevorzugt für die Anwendung in Verdampfungsprozessen eingesetzt werden, insbes. bei hinterschnittenen, hohlraumartigen Strukturen, zeigt sich, dass sich der Doppler-Spektrumsmittelwert m zu Frequenzen unterhalb der Doppler-Grundfrequenz $f_0$ verschiebt und dass eine Erhöhung des Wärmeübergangskoeffizienten $\alpha_{evap}$ gleichzusetzen ist mit dem zunehmenden Flächenintegral A des Radar-Doppler-Spektrums. Gleichzeitig nehmen die Varianz S und die Standardabweichung $\sigma$ ab.

Die Erfindung wird anhand der folgenden Ausführungsbeispiele näher erläutert:

1. Es wurden längsnahtgeschweißte Wärmetauscherrohre aus Kupfer mit einem Außendurchmesser von 9,52 mm (3/8") und einer Kernwanddicke von 0,30 mm gemäß folgender Tabelle 1 untersucht. Beispielhaft sind ein Glattrohr, ein Rohr mit einfacher Innenrippenstruktur sowie ein Rohr mit doppelter Innenrippenstruktur aufgeführt.

| Tabelle 1 | Glattrohr | Rohr mit einfacher Innenrippenstruktur | Rohr mit doppelter Innenrippenstruktur |
|---|---|---|---|
| Rohrabmessung | 9.52 mm (3/8") | 9,52 mm (3/8") | 9,52 mm (3/8") |
| Rippenhöhe | - | 0.20 mm | 0,20 mm |
| Kernwanddicke | 0,30 mm | 0,30 mm | 0,30 mm |
| 1. Berippung | | | |
| Rippenanzahl | - | 60 | 58 |
| Drallwinkel | - | 18° | 30° |
| 2. Berippung | | | |
| Rippenanzahl | - | - | 80 |
| Drailwinkel | - | - | -10° |

Als Werkstoffe für die Rohre werden weiterhin Kupferlegierungen, Aluminium, Aluminium-Legierungen sowie Stahl und Edelstahl bevorzugt.

Sowohl die Geometriegrößen als auch die Wärmeleistung wurden im Einzelrohrmeßstand bestimmt. Die wärmetechnischen Messungen im Verflüssigungsprozeß ergaben in der Reihenfolge Glattrohr, Rohr mit einfacher Rippenstruktur und Rohr mit doppelter Rippenstruktur die in Tabelle 2a dargestellten Leistungsverhältnisse.

**Tabelle 2a**

| Massenstrom in kg/m²s | Glattrohr | | einfach beripptes Rohr | | doppelt beripptes Rohr | |
|---|---|---|---|---|---|---|
| | Meßwert Wärmeübergangskoeffizient $\alpha_{cond}$ in W/m²K | Verhältnis | Meßwert Wärmeübergangskoeffizient $\alpha_{cond}$ in W/m²K | Verhältnis | Meßwert Wärmeübergangskoeffizient $\alpha_{cond}$ in W/m²K | Verhältnis |
| 200 | 2400 | 1 | 3700 | 1,5 | 5200 | 2,2 |
| 300 | 3000 | 1 | 4400 | 1,5 | 6500 | 2,2 |
| 400 | 3500 | 1 | 5000 | 1,4 | 8000 | 2,3 |
| 500 | 4200 | 1 | 5800 | 1,4 | 9400 | 2,2 |
| 600 | 4900 | 1 | 6900 | 1,4 | 10900 | 2,2 |
| 700 | 5600 | 1 | 8000 | 1,4 | 12600 | 2,3 |

**Tabelle 2b**

| | Glattrohr | | einfach beripptes Rohr | | doppelt beripptes Rohr | |
|---|---|---|---|---|---|---|
| | Meßwert | Verhältnis | Meßwert | Verhältnis | Meßwert | Verhältnis |
| FlächenIntegral A | 26 | 1 | 41 | 1,6 | 63 | 2,4 |
| Varianz S | 93025 | 1 | 50703 | 1,8 | 35601 | 2,6 |
| Std.abweich. $\sigma$ | 305 | 1 | 225 | 1,4 | 189 | 1,6 |
| Mittelwert m ($f_0$) | 626 | · | 643 | · | 635 | · |

Parallel dazu wurden jeweils Proben der zur Herstellung der Rohre verwendeten Bänder auf einen bewegten Probenträger aufgebracht. Anschließend wurden die glatte Oberfläche bzw. die Innenstrukturen mit Hilfe der Radar-Doppler-Spektroskopie analysiert. Die Prüfung erfolgte mit einem 94 GHz-Radarmodul bei einer Geschwindigkeit des Probenträgers von 2 m/sec.

Fig. 2 zeigt die im Falle der beispielhaft aufgeführten Rohre erhaltenen Radar-Doppler-Spektren. Die dargestellten Ergebnisse sind auf das Spektrum des Glattrohrs normiert.

Das Spektrum (a) betrifft das Rohr mit einfacher Rippenstruktur, Spektrum (b) das Rohr mit doppelter Rippenstruktur.

Für die Kenngrößen Flächenintegral A, Varianz S und Standardabweichung σ ergeben sich folgende Werte gemäß Tabelle 2b.

Auffallend ist die gute Übereinstimmung der Verhältniszahlen bezüglich der wärmetechnisch bestimmten $\alpha_{cond}$ und der aus den Radar-Doppler-Spektren bestimmten Flächenintegrale A.

Gleichzeitig geben die reziproken Zahlen für S (bzw. σ) die Tendenz in den ins Verhältnis gesetzten Leistungsdaten korrekt wieder.

Ferner liegen die festgestellten Doppler-Spektrumsmittelwerte m oberhalb der beim Glattrohr eingetragenen Doppler-Grundfrequenz $f_0$, was kennzeichnend für Kondensationsrohre ist.

2. In einem zweiten Ausführungsbeispiel sind ein Glattrohr, ein Rohr mit einfacher Innenrippenstruktur sowie ein Rohr mit doppelter Innenrippenstruktur, wie sie für Verdampfungsprozesse eingesetzt werden, untersucht worden (vgl. folgende Tabelle 3).

| Tabelle 3 | Glattrohr | Rohr mit einfacher Innenrippenstruktur | Rohr mit doppelter Innenrippenstruktur |
|---|---|---|---|
| Rohrabmessung | 9,52 mm (3/8") | 9,52 mm (3/8") | 9,52 mm (3/8") |
| Rippenhöhe | - | 0,20 mm | 0,20 mm |
| Kernwanddicke | 0,30 mm | 0,24 mm | 0,22 mm |
| 1. Berippung | | | |
| Rippenanzahl | - | 55 | 45 |
| Drallwinkel | - | 34° | 0° |
| 2. Berippung | | | |
| Rippenanzahl | - | - | 82 |
| Drallwinkel | - | - | 42° |

Die wärmetechnischen Messungen im Verdampfungsprozess ergaben in der Reihenfolge Glattrohr, Rohr mit einfacher Rippenstruktur und Rohr mit doppelter Rippenstruktur die in Tabelle 4a dargestellten Leistungsverhältnisse.

Parallel dazu wurden jeweils Proben der zur Herstellung der Rohre verwendeten Bänder mit Hilfe der Radar-Doppler-Spektroskopie analysiert. Für die Kenngrößen Flächenintegral A, Varianz S und Standardabweichung σ ergeben sich folgende Werte gemäß Tabelle 4b.

**Tabelle 4a**

| Massenstrom In kg/m²s | Glattrohr Meßwert Wärmeübergangs-koeffizient $\alpha_{evap}$ In W/m²K | Glattrohr Verhältnis | einfach beripptes Rohr Meßwert Wärmeübergangs-koeffizient $\alpha_{evap}$ In W/m²K | einfach beripptes Rohr Verhältnis | doppelt beripptes Rohr Meßwert Wärmeübergangs-koeffizient $\alpha_{evap}$ in W/m²K | doppelt beripptes Rohr Verhältnis |
|---|---|---|---|---|---|---|
| 140 | 2600 | 1 | 5800 | 2,2 | 6200 | 2,4 |
| 160 | 2700 | 1 | 5600 | 2,1 | 6800 | 2,5 |
| 180 | 2900 | 1 | 5400 | 1,9 | 7250 | 2,5 |
| 200 | 3000 | 1 | 5200 | 1,7 | 7700 | 2,6 |
| 220 | 3000 | 1 | 5100 | 1,7 | 8000 | 2,7 |

**Tabelle 4b**

| | Glattrohr Meßwert | Glattrohr Verhältnis | einfach beripptes Rohr Meßwert | einfach beripptes Rohr Verhältnis | doppelt beripptes Rohr Meßwert | doppelt beripptes Rohr Verhältnis |
|---|---|---|---|---|---|---|
| Flächenintegral A | 26 | 1 | 65 | 2,5 | 97 | 3,7 |
| Varianz S | 93025 | 1 | 38097 | 2,4 | 32469 | 2,9 |
| Std.abweich. $\sigma$ | 305 | 1 | 198 | 1,5 | 180 | 1,7 |
| Mittelwert m | 626 ($f_0$) | - | 614 | - | 618 | - |

Die ins. Verhältnis gesetzten, aus den Radar-Doppler-Spektren bestimmten Flächenintegrale A ebenso wie die reziproken Werte für S (bzw. $\sigma$) geben die Tendenz der Verhältnisse der Wärmeübergangskoeffizienten $\alpha_{evap}$ korrekt wieder. Gleichzeitig zeigen die unterhalb der Doppler-Grundfrequenz $f_0$ liegenden Doppler-Spektrumsmittelwerte m an, dass es sich um für Verdampfungsprozesse besonders geeignete Strukturen handelt.

Die Erfindung bietet somit die Möglichkeit, aus den zu bestimmenden Meßgrößen A, S (bzw. $\sigma$), m unmittelbar Rückschlüsse auf die Verdampfungs- und Verflüssigungsleistung der jeweiligen Oberflächenstruktur zu ziehen.

**Patentansprüche**

1. Verfahren zur Kennzeichnung der strukturierten Innen- und/oder Außenoberfläche längsnahtgeschweißter Wärmetauscherrohre,
   **dadurch gekennzeichnet,**
   **daß** jeweils eine definierte Probe des strukturierten Bandes, das zur Herstellung des Wärmetauscherrohres vorgesehen ist, bewegt und einer Radar-Doppler-Spektroskopie-Messung unterzogen wird unter Verwendung elektromagnetischer Wellen im Frequenzbereich von 1 bis 100 GHz, wobei aus dem auf das Glattrohr normierten Radar-Doppler-Spektrum die folgenden Größen ermittelt werden:

   Flächenintegral A, Mittelwert m und Varianz S.

2. Verfahren zur Kennzeichnung der strukturierten Innen- und/oder Außenoberfläche nahtloser Wärmetauscherrohre,
   **dadurch gekennzeichnet,**
   **daß** jeweils eine definierte Probe aus der in eine Ebene abgewickelten Oberfläche des Wärmetauscherrohres bewegt und einer Radar-Doppler-Spektroskopie-Messung unterzogen wird unter Verwendung elektromagnetischer Wellen im Frequenzbereich von 1 bis 100 GHz, wobei aus dem auf das Glattrohr normierten Radar-Doppler-Spektrum die folgenden Größen ermittelt werden:

   Flächenintegral A, Mittelwert m und Varianz S.

3. Verwendung der nach dem Verfahren gemäß Anspruch 1 oder 2 ermittelten Größen Flächenintegral A und Varianz S zur wärmetechnischen Klassifizierung der Wärmetauscherrohre durch Korrelation mit der Wärmeübertragungseigenschaft gemäß Wärmeübergangskoeffizient a.

4. Verwendung nach Anspruch 3,
   wobei bei Oberflächen, an denen Kondensation stattfindet, $\alpha_{cond}$ mit A bzw. S derart korreliert, daß eine Zunahme von A bzw. eine Abnahme von S die gewünschte Zunahme von $\alpha_{cond}$ anzeigt, d. h. $\alpha_{cond} \sim A$ bzw. $\alpha_{cond} \sim S^{-1}$, und wobei der Spektrumsmittelwert m oberhalb der Radar-Doppler-Grundfrequenz $f_0$ liegt.

5. Verwendung nach Anspruch 3,
   wobei bei Oberflächen, an denen Verdampfung stattfindet, $\alpha_{evap}$ mit A bzw. S derart korreliert, daß eine Zunahme von A bzw. eine Abnahme von S die gewünschte Zunahme von $\alpha_{evap}$ anzeigt, d.h. $\alpha_{evap} \sim A$ bzw. $\alpha_{evap} \sim S^{-1}$, und wobei der Spektrumsmittelwert m unterhalb der Radar-Doppler-Grundfrequenz $f_0$ liegt.

**Claims**

1. Method for characterising the structured inner and/or outer surface of heat exchange tubes which are welded along the longitudinal seam,
   **characterised in that**
   a defined test-piece of the structured band which is provided in order to produce the heat exchange tube is moved and subjected to a radar Doppler spectroscopy measurement using electromagnetic waves in the frequency range of from 1 to 100 GHz, the following variables being established from the radar Doppler spectrum which is standardised relative to the smooth tube:

   surface integral A, mean valve m and variance S.

2. Method for characterising the structured inner and/or outer surface of seamless heat exchange tubes,
   **characterised in that**
   a defined test-piece from the surface of the heat exchange tube that is laid out into a plane is moved and subjected to a radar Doppler spectroscopy measurement using electromagnetic waves in the frequency range of from 1 to 100 GHz, the following variables being established from the radar Doppler spectrum which is standardised relative to the smooth tube:

   surface integral A, mean value m and variance S.

3. Use of the variables surface integral A and variance S, which have been established in accordance with the method according to claim 1 or 2, in order to technically classify in a thermal manner the heat exchange tubes by correlation with the heat transfer characteristics in accordance with heat transfer coefficient $\alpha$.

4. Use according to claim 3,
wherein, in the case of surfaces on which condensation occurs, $\alpha_{cond}$ correlates with A or S in such a manner that an increase of A and/or a decrease of S indicates the desired increase of $\alpha_{cond}$, that is to say that $\alpha_{cond} \sim A$ and/or $\alpha_{cond} \sim S^{-1}$, and wherein the mean spectrum value m is above the radar Doppler base frequency $f_0$.

5. Use according to claim 3,
wherein, in the case of surfaces on which evaporation occurs, $\alpha_{evap}$ correlates with A or S in such a manner that an increase of A and/or a decrease of S indicates the desired increase of $\alpha_{evap}$, that is to say that $\alpha_{evap} \sim A$ and/or $\alpha_{evap} \sim S^{-1}$, and wherein the mean spectrum value m is below the radar Doppler base frequency $f_0$.

**Revendications**

1. Procédé pour la caractérisation de la surface interne et/ou externe structurée de tubes échangeurs de chaleur soudés longitudinalement,
**caractérisé en ce que**,
un échantillon défini respectif de la bande structurée, qui est prévu pour la fabrication du tube échangeur de chaleur, se déplace et est soumis à une mesure par spectroscopie Doppler en utilisant des ondes électromagnétiques dans une plage de fréquences comprise entre 1 et 100 GHz, où les grandeurs suivantes sont recherchées à partir du spectre Doppler normalisé sur le tube à parois lisses : intégrale de surface A, moyenne m et variance S.

2. Procédé pour la désignation de la surface interne et/externe structurée de tubes échangeurs de chaleur sans soudure, **caractérisé en ce que**,
un échantillon défini respectif provenant de la surface développée dans un plan du tube échangeur de chaleur se déplace et est soumis à une mesure par spectroscopie Doppler en utilisant des ondes électromagnétiques dans une plage de fréquences comprise entre 1 et 100 GHz, où les grandeurs suivantes sont recherchées à partir du spectre Doppler normalisé sur le tube à parois lisses : intégrale de surface A, moyenne m et variance S.

3. Utilisation des grandeurs, intégrale de surface A et variance S, recherchées avec le procédé selon la revendication 1 ou 2 pour la classification thermique des tubes échangeurs de chaleur grâce à la corrélation avec la propriété de transmission de chaleur selon le coefficient de transmission de chaleur $\alpha$.

4. Utilisation selon la revendication 3, où, dans le cas de surfaces, sur lesquelles se produit une condensation, $\alpha_{cond}$ est corrélé avec A ou S de sorte qu'un accroissement de A ou une diminution de S indique l'accroissement désiré de $\alpha_{cond}$, c'est-à-dire $\alpha_{cond} \sim A$ ou $\alpha_{cond} \sim S^{-1}$, et où la moyenne de spectre m se trouve au-dessus de la fréquence de base Doppler $f_0$.

5. Utilisation selon la revendication 3, où, dans le cas de surfaces, sur lesquelles une évaporation se produit, $\alpha_{evap}$ est corrélé avec A ou S de sorte qu'un accroissement de A ou une diminution de S indique l'accroissement désiré de $\alpha_{evap}$, c'est-à-dire $\alpha_{evap} \sim A$ ou $\alpha_{evap} \sim S^{-1}$, et où la moyenne de spectre m se trouve en dessous de la fréquence de base Doppler $f_0$.

EP 1 158 268 B1

Fig. 1

10

Fig. 2

Fig. 3a

spektrale Dichte (normiert)

Fig. 3b

Frequenz in Hz

$\sigma = \sqrt{S}$

Fig. 3c